# EUROPÄISCHE PATENTANMELDUNG

(11) **EP 1 418 319 A1**
(43) Veröffentlichungstag der Anmeldung: **12.05.2004**
(21) Anmeldenummer: 02025194.8
(22) Anmeldetag: 11.11.2002
(51) Int. Cl.: F02C 7/18, F01D 5/08

(54) **Gasturbine**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft eine Gasturbine (1) mit einem drehgelagerten rotationssymmetrischen Rotor (2), der an seinem Außenumfang Laufschaufeln (17) aufweist, auf die ein Arbeitsmedium geleitet wird, mit einem von einem Verdichter (3) bereitgestellten Kühlfluid zur Kühlung von mit den Laufschaufeln (17) zusammenwirkenden Leitschaufeln (16) und mit einem von dem Kühlfluid durchströmten mit dem Rotor (2) verbundenen Kanal (20). Um eine Gasturbine anzugeben, die den überhitzungsbedingten Verschleiß am Rotor (2) mindert, wird vorgeschlagen, dass zur Kühlung des Kühlfluids im Kanal (20) Wasser verdampft wird.

## Beschreibung

Die Erfindung betrifft eine Turbine gemäß dem Oberbegriff des Anspruchs 1.

Aus der EP 0 447 886 A1 ist eine axialdurchströmte Gasturbine mit einem Verdichter bekannt. Die Gasturbine weist eine Turbinenstufe auf, deren in Ringen hintereinander angeordnete Leit- und Laufschaufeln mittels Kühlluft gekühlt werden. Dazu wird verdichtete Luft als Kühlfluid hinter der Laufreihe der letzten Verdichterstufe entnommen und am Rotor entlang geführt, der dabei konvektiv gekühlt wird. Die Kühlluft wird dann der in Kühlstromrichtung dem Rotor nachgeschalteten Turbinenstufe zugeführt.

Bei erhöhten Drücken im Verdichter, hervorgerufen durch eine Veränderung der Umgebungstemperatur und des Umgebungsdrucks, besteht die Gefahr der Überhitzung der Rotorteile im Bereich des Verdichterausgangs bis zur Turbine.

Diese Überhitzung des Rotors ist mit unerwünschten Wärmeausdehnungen und/oder mechanischen Spannungen verbunden, die zu Deformierungen der Bauteile führen können.

Die der Erfindung zugrunde liegende Aufgabe ist es, den Verschleiß der Turbine zu verringern.

Diese Aufgabe wird gelöst durch die Merkmale des Anspruchs 1. Vorteilhafte Ausgestaltungen der Turbine sind in den Unteransprüchen gegeben.

Die Lösung sieht vor, dass zur Kühlung des Kühlfluids im Kanal eine Flüssigkeit verdampft wird. Durch das Verdampfen der Flüssigkeit im Kanal wird dem Kühlfluid die Verdampfungswärme entzogen und somit gekühlt. Das so zur Kühlung bereitgestellte Kühlfluid weist folglich keine ungewollte hohe Erwärmung auf, die aufgrund des erhöhten Druckes im Verdichter hervorgerufen wird. Eine Überhitzung des Rotors wird folglich vermieden, unabhängig von äußeren Einflussfaktoren wie Außendruck und Außentemperatur.

Der Kanal verläuft derart entlang des Rotors und ist mit ihm so verbunden, dass dieser vom Kühlfluid gekühlt wird. Dadurch wird eine unzulässige Erwärmung des Rotors verhindert, so dass die durch die Temperaturaufnahme auftretenden axialen und radialen Dehnungen des Rotors innerhalb der vorgegebenen Grenzen bleiben. Berührungen der Enden des Rotors mit dem Gehäuse oder unvorhergesehene axiale Druckspannungen an den Lagern des Rotors werden somit vermieden. Dies bedingt einen verschleißarmen Betrieb der Turbine.

Die Kühlung des Rotors ist einfach zu bewerkstelligen, wenn der Kanal als koaxial zum Rotor und von dem Kühlfluid durchströmter Ringkanal ausgebildet ist, dessen eine Innenseite von der Rotoroberfläche gebildet wird. Somit strömt das Kühlfluid entlang des Rotors und kann dabei diesen hinreichend konvektiv kühlen.

Zweckmäßigerweise wird die andere Innenseite des Ringkanals von einer Hohlwellenabdeckung gebildet.

Zwischen dem Verdichteraustritt und der ersten Turbinenstufe befindet sich im Gehäuse der Turbine koaxial zum Rotor angeordnet die Brennkammer. In der Brennkammer wird der Großteil der vom Verdichter bereitgestellten verdichteten Luft mit einem Brennmittel unter Bildung von hohen Temperaturen verbrannt. Eine unzulässige Erwärmung des Rotors in diesem temperaturkritischem Bereich kann durch die dortige Anordnung des Ringkanals und dem dadurch geführten gekühlten Kühlfluid wirksam verhindert werden. Gleichfalls ist eine sparsame Verwendung des Kühlfluids gegeben.

Vorzugsweise wird die Flüssigkeit am verdichterseitigem Endbereich des Ringkanals in diesen eingebracht. Innerhalb des Ringkanals strömt das Kühlfluid in Längserstreckung des Rotors vom Verdichter zur Turbine. Demzufolge erfolgt das Einbringen der Flüssigkeit im Ringkanal am Anfang des zu kühlenden Rotorbereichs. Das gekühlte Kühlfluid kühlt demgemäss über die gesamte axiale Erstreckung des Ringkanals den Rotor.

Besonders vorteilhaft ist die Ausgestaltung, wenn die Flüssigkeit in den Ringkanal mittels einer Düse eingedüst wird. Die Düse zerstäubt die Flüssigkeit in eine Vielzahl kleiner Tropfen, die dann durch ihren Aggregatswechsel von flüssig zu gasförmig der Umgebung Wärme entziehen und folglich so das Kühlfluid abkühlen. Daher wird eine unzulässige Erwärmung des Kühlfluids verhindert.

Vorteilhafterweise ist die Flüssigkeit Wasser.

Zweckmäßigerweise ist das Kühlfluid die Verdichteraustrittsluft. Die vom Verdichter bereitgestellte verdichtete Luft weist üblicherweise eine Temperatur von ungefähr 400 °C auf und somit der im Ringkanal strömende Kühlluftstrom ebenfalls, so dass der Aggregatswechsel der eingedüsten Wassers dadurch unterstützt ablaufen kann. Wasseransammlungen und ggf. eine dadurch hervorgerufene Korrosion am Rotor werden gleichfalls vermieden.

Hinter dem Verdichteraustritt, im Diffusor, wird ein größerer Anteil der verdichteten Luft, der Verdichtermassenstrom, zum Brenner umgelenkt und ein geringerer Anteil der verdichteten Luft wird als Kühlluft weiter nach innen zum Rotor hin abgelenkt und zum Ringkanal geführt. Von besonderem Vorteil ist daher die Ausgestaltung, bei der ein Abstützen der dem Rotor zugewandten Bauelemente mittels Diffusorrippen erfolgt. Sie sind einerseits am Stator der Turbine befestigt und erstrecken sich durch den Strömungskanal. Andererseits halten sie die Elemente des Strömungskanals, die dem Rotor zugewandt sind.

Der ringförmige und zu der Drehachse des Rotors symmetrische Aufbau erfordert, dass das von außerhalb der Turbine bereitgestellte Wasser, welches im Ringkanal zur Erzeugung von Verdampfungskälte eingedüst wird, den Verdichtermassenstrom kreuzen muss. Hierzu sind die den Strömungskanal kreuzenden Diffusorrippen hohl ausgeführt, so dass in ihnen Rohre für das Wasser verlaufen. Dabei kommuniziert das Wasserrohr statorseitig mit einer Wasserquelle und rotorseitig mit der Düse des Ringkanals. Das zur Kühlung des Kühlfluids benötigte Wasser kreuzt so den Verdichtermassenstrom ohne diesen weiter zu beeinträchtigen. Alternativ könnte der dem Verdichter entnommene Anteil der verdichteten Luft, die zur Kühlung verwendet wird, extern mittels eines Wärmetauschers gekühlt werden. Danach müsste die extern gekühlte Kühlluft den Verdichtermassenstrom kreuzen, um zum innenliegenden Rotor zu gelangen. Jedoch ist dabei ein wesentlich größerer Volumenstrom erforderlich als bei der vorgeschlagenen Lösung. Daher ist das Einbringen von Wasser in den Ringkanal, welches dabei durch Rohre geringen Querschnitts durch die Diffusorrippen geführt wird, wesentlich einfacher.

Die Erfindung wird anhand von Zeichnungen erläutert. Dabei zeigen die Figuren:
- Fig. 1: einen Längsteilschnitt durch eine Gasturbine und
- Fig. 2: einen schematischen Längsschnitt durch den Rotor, die Brennkammer, die erste Turbinenstufe und den Diffusor der Gasturbine gemäß Fig. 1.

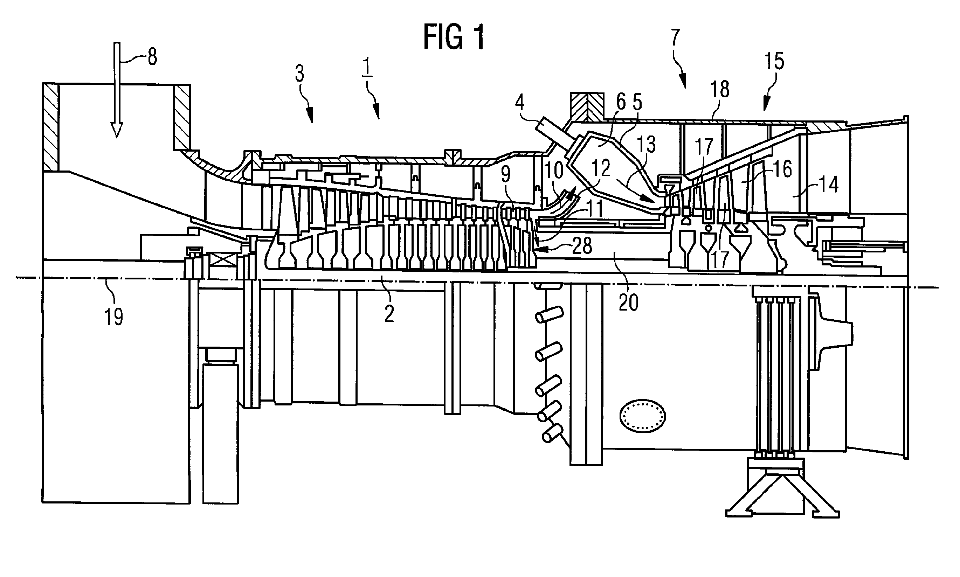

Die Fig. 1 zeigt einen Längsteilschnitt durch eine Gasturbine 1, die einen Rotor 2, einen Verdichter 3, einen Brenner 4, eine Ringbrennkammer 5 mit einem Verbrennungsraum 6 und eine Turbine 7 aufweist.

Während des Betriebs der Gasturbine 1 saugt ein Ende des Verdichters 3 Luft 8 an, die dann am anderen Ende als verdichtete Luft 9 bereitgestellt wird. Diese wird dann in einen Luftmassenstrom 10 und in einen Kühlluftstrom 11 aufgeteilt. Der Kühlluftstrom 11 wird zur Kühlung der Turbine 7 und des Rotors 3 verwendet, wohingegen der Luftmassenstrom 10 zuerst zur Kühlung der Ringbrennkammer 5 und dann zur Verbrennung genutzt wird. Dazu wird der Luftmassenstrom 10 nach dem Austreten aus dem Verdichter 3 von einem Diffusor 12 in Richtung der Ringbrennkammer 5 umgeleitet und von da aus weiter zum Brenner 4 geführt. Anschließend erfolgt im Brenner 4 die Vermischung des Luftmassenstroms 10 mit einem Brennmittel, welches dann im Verbrennungsraum 6 der Ringbrennkammer 5 verbrannt wird. Das heiße Arbeitsmedium 13 strömt entlang eines Heißgaskanals 14 vorbei an Turbinenstufen 15. Jede Turbinenstufe 15 wird dabei aus zwei hintereinandergeschalteten Schaufelringen gebildet. In Strömungsrichtung des Arbeitsmediums 13 gesehen folgt einer aus Leitschaufeln 16 gebildeten Leitschaufelreihe eine aus Laufschaufeln 17 gebildete Reihe. An den Laufschaufeln 17, die im Gegensatz zu den am Turbinengehäuse 18 befestigten Leitschaufeln 16 am Rotor 2 montiert sind, entspannt sich das Arbeitsmedium 13 impulsartig und treibt somit einen mit dem Rotor 2 verbundenen nicht dargestellten Generator und den Verdichter 3 an.

Der Ringbrennkammer 5 folgt radial weiter innenliegend ein am Rotor 2 angeordneter Ringkanal 20.

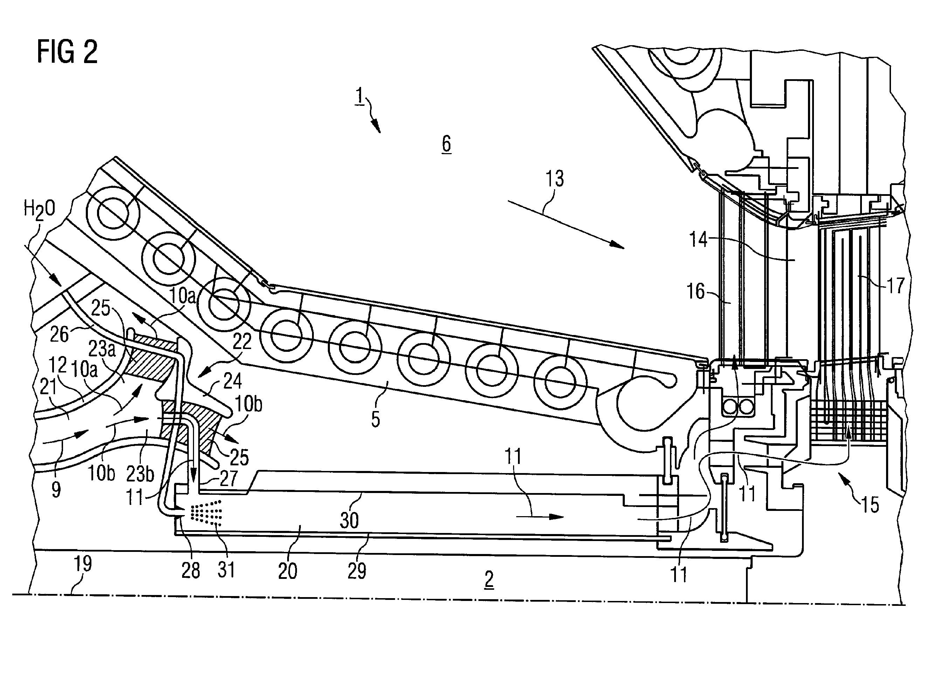

Fig. 2 zeigt in einen schematischen Längsschnitt durch den Rotor 2, einen Verdichteraustritt 21, den Diffusor 12, die Ringbrennkammer 5 und die erste Turbinenstufe 15 der Gasturbine 1.

Die Ringbrennkammer 5 mit dem Verbrennungsraum 6 ist teilweise dargestellt, in der Fig. 2 oberhalb des Diffusors 12. Der Verbrennungsraum 6 kommuniziert mit dem Heißgaskanal 14, in dem die Leit- und Laufschaufeln 16, 17 angeordnet sind.

Dem Verdichter 3, in Fig. 2 nicht dargestellt, strömungstechnisch nachgeschaltet ist der ringförmige Verdichteraustritt 21, der in den Diffusor 12 mündet. Im Diffusor 12 erfolgt eine Aufteilung des Strömungskanals für die verdichtete Luft 9 mittels eines Strömungskeils 24 in zwei Teilkanäle 23a, 23b (Y-artige Kanalgabelung 22). Der im Querschnitt L-förmig ausgebildete Strömungskeil 24 umgreift den Rotor 2 als Ring und ist dabei mit dem Diffusor 12 über mehrere Diffusorrippen 25 verbunden; er wird somit von diesen fest gehalten. Jeder Teilkanal 23a, 23b wird also von mehreren Diffusorrippen 25 gekreuzt.

Die Diffusorrippe 25 ist hohl ausgebildet, wobei ein Wasserrohr 26 durch sie verläuft. Das Wasserrohr 26 kommuniziert einerseits mit einer nicht gezeigten Wasserquelle und andererseits über weitere Verbindungsrohre mit einer am verdichterseitigen Ende des Ringkanals 20 angeordneten Wasserdüse 28.

In den Teilkanal 23b ragt nach Art eines Periskops ein Kühlluftentnahmerohr 27 hinein, welches mit dem Ende des Ringkanals 20 kommuniziert, dass dem Verdichter 3 zugewandt ist. Der Ringkanal 20 umgibt den Rotor 2 ringförmig, wobei die Oberfläche 29 des Rotors 2 die radial innenliegende Begrenzung des Ringkanals 20 darstellt. Die radial außenliegende Begrenzung des Ringkanals 20 wird durch eine koaxiale Hohlwelle 30 gebildet, die zur Rotoroberfläche 29 beabstandet ist und sich in Axialrichtung des Rotors 2 erstreckt. Der Ringkanal 20 ist somit ringförmig um den Rotor 2 ausgebildet und erstreckt sich in Längsrichtung parallel zu diesem.

Während des Betriebs der Gasturbine 1 verdichtet der Verdichter 3 die von ihm angesaugte Luft 8, die dann verdichtet durch den Verdichteraustritt 21 in den Diffusor 12 strömt. Im Diffusor 12 wird die Luft 9 durch den ringförmigen Strömungskeil 24 in zwei Luftmassenströme 10a, 10b aufgeteilt, wobei beide Ströme 10a, 10b zur Kühlung der Ringbrennkammer 5 und anschließend zur Verbrennung des Brennmittels verwendet werden. Ein Teil des Luftmassenstroms 10b strömt in das Kühlluftentnahmerohr 27 hinein und wird somit dem Luftmassenstrom 10b entnommen. Dieser Teil wird so umgelenkt, dass er anschließend in den Ringkanal 20 hineinströmt und dort als Kühlluftstrom 11 wirkt.

Das Wasser strömt von der Wasserquelle durch Verbindungsrohre zum Wasserrohr 26 und von dort aus weiter zur Wasserdüse 28. Durch die Wasserdüse 28 wird das Wasser in den Ringkanal 20 eingedüst und dabei in eine Vielzahl Wasserperlen 31 zerstäubt. Diese verdampfen, wobei der Umgebung Wärme entzogen wird, so dass der Kühlluftstrom 11 in dem Ringkanal 20 gekühlt wird. Ein aufgrund hoher Drücke im Verdichter 3 zu heißer Kühlluftstrom 11 wird so in den vorgegebenen Temperaturbereich zurückgekühlt. Der Kühlluftstrom 11 strömt dann entlang des Rotors 2 durch den Ringkanal 20 und kühlt diesen konvektiv. Am turbinenseitigen Ende des Ringkanals 20 mündet der so gekühlte Kühlluftstrom 11 in ein Kühlkanalsystem, welches den Kühlluftstrom 11 zu den Leitschaufeln 16 und zu den Laufschaufeln 17 der ersten Turbinenstufe 15 führt, um diese ebenfalls mit Kühlluft zu versorgen und zu kühlen.

### Bezugszeichenliste

- 1: Gasturbine
- 2: Rotor
- 3: Verdichter
- 4: Brenner
- 5: Ringbrennkammer
- 6: Verbrennungsraum
- 7: Turbine
- 8: Luft
- 9: verdichtete Luft
- 10: Massenluftstrom
- 11: Kühlluft
- 12: Diffusor
- 13: Arbeitsmedium
- 14: Heißgaskanal
- 15: Turbinenstufe
- 16: Leitschaufeln
- 17: Laufschaufeln
- 18: Turbinengehäuse
- 19: Rotationsachse
- 20: Ringkanal
- 21: Verdichteraustritt
- 22: Kanalgabelung
- 23: Teilkanäle
- 24: Strömungskeil
- 25: Diffusor Rippen
- 26: Wasserrohr
- 27: Kühlluftentnahmerohr
- 28: Wasserdüse
- 29: Rotoroberfläche
- 30: Hohlwelle
- 31: Wasserperlen

## Patentansprüche

1. Turbine
mit einem drehgelagerten rotationssymmetrischen Rotor, der an seinem Außenumfang Laufschaufeln aufweist, auf die ein Arbeitsmedium geleitet wird,
mit einem von einem Verdichter bereitgestellten Kühlfluid zur Kühlung der mit den Laufschaufeln zusammenwirkenden Leitschaufeln und
mit einem von dem Kühlfluid durchströmten mit dem Rotor verbundenen Kanal,
**dadurch gekennzeichnet,**
**dass** zur Kühlung des Kühlfluids im Kanal eine Flüssigkeit verdampft wird.

2. Turbine nach Anspruch 1,
**dadurch gekennzeichnet,**
**dass** der Kanal entlang des Rotors verläuft und derart mit dem Rotor verbunden ist, dass dieser vom Kühlfluid mitgekühlt wird.

3. Turbine nach Anspruch 1 oder 2,
**dadurch gekennzeichnet,**
**dass** der Kanal ein koaxial zum Rotor ausgebildeter und von dem Kühlfluid durchströmter Ringkanal ist, dessen eine Innenseite von der Rotoroberfläche gebildet ist.

4. Turbine nach einem der Ansprüche 1 bis 3,
**dadurch gekennzeichnet,**
**dass** die andere Innenseite des Ringkanals von einer Hohlwellenabdeckung gebildet ist.

5. Turbine nach einem der Ansprüche 1 bis 4,
**dadurch gekennzeichnet,**
**dass** der Ringkanal zwischen dem Austritt des Verdichters und der ersten Turbinenstufe angeordnet ist.

6. Turbine nach einem der Ansprüche 1 bis 5,
**dadurch gekennzeichnet,**
**dass** das Einbringen des Kühlfluids in den Ringkanal in dem Endbereich des Ringkanals erfolgt, der dem Verdichter zugewandt ist.

7. Turbine nach einem der Ansprüche 1 bis 6,
**dadurch gekennzeichnet,**
**dass** das Einbringen der Flüssigkeit in den Ringkanal in dem Endbereich des Ringkanals erfolgt, der dem Verdichter zugewandt ist.

8. Turbine nach einem der Ansprüche 1 bis 7,
**dadurch gekennzeichnet,**
**dass** die Flüssigkeit in den Ringkanal mittels einer Düse eingedüst wird.

9. Turbine nach einem der Ansprüche 1 bis 8,
**dadurch gekennzeichnet,**
**dass** die Flüssigkeit Wasser ist.

10. Turbine nach einem der Ansprüche 1 bis 9,
**dadurch gekennzeichnet,**
**dass** das Kühlfluid Verdichteraustrittsluft ist.

11. Turbine nach einem der Ansprüche 1 bis 10,
**dadurch gekennzeichnet,**
**dass** in einem dem Verdichteraustritt in Strömungsrichtung der Verdichterluft nachgeschalteten Strömungskanal eine diesen durchquerende Diffusorrippe angeordnet ist.

12. Turbine nach Anspruch 11,
**dadurch gekennzeichnet,**
**dass** das radial äußere Ende der Diffusorrippe am Stator der Turbine befestigt ist und das dem äußeren Ende gegenüberliegende radial innere Ende dem Rotor zugewandt ist.

13. Turbine nach Anspruch 11 oder 12,
**dadurch gekennzeichnet,**
**dass** die Diffusorrippe hohl ausgebildet ist und in ihr ein Rohr verläuft, welches statorseitig mit einer Wasserquelle und rotorseitig mit der zur Eindüsung des Wassers im Ringkanal verwendeten Düse kommuniziert.

14. Gasturbine mit einer Turbine nach einem der vorhergehenden Ansprüche.
